# EUROPEAN PATENT APPLICATION

(11) **EP 4 770 057 A1**
(43) Date of publication of application: **01.07.2026**
(21) Application number: 24855733.2
(22) Date of filing: 16.08.2024
(51) Int. Cl.: H04L 67/62

(54) **REQUEST PROCESSING METHOD AND APPARATUS, COMPUTER DEVICE, AND STORAGE MEDIUM**

(30) Priority: 22.08.2023 CN 202311063511
(71) Applicant: Shenzhen TCL New Technology Co., Ltd, Shenzhen, Guangdong 518052 (CN)
(72) Inventor: XU, Liang, Shenzhen, Guangdong 518052 (CN)
(74) Representative: Murgitroyd & Company
(86) International application number: PCT/CN2024/112648
(87) International publication number: WO 2025/040009

(57) **Abstract**

The present disclosure provides a request processing method, comprising: determining an execution strategy on the basis of a request time of a network request instruction; if the execution strategy is delayed execution, determining a delayed execution time on the basis of a preset delay duration, and updating a recorded execution request parameter on the basis of a request parameter of g the network request instruction; and in response to the delayed execution time, executing a network request on the basis of the recorded execution request parameter. The real-time performance of requested data is ensured.

## Description

This application claims the priority of Chinese Patent Application No. 202311063511.3, entitled "REQUEST PROCESSING METHOD AND APPARATUS, COMPUTER DEVICE, AND STORAGE MEDIUM", filed on August 22, 2023, the disclosure of which is incorporated herein by reference in its entirety.

### FIELD OF THE DISCLOSURE

The present disclosure relates to the field of computer technologies, and in particular, to a request processing method, an apparatus, a computer device, and a storage medium.

### BACKGROUND

Network request throttling refers to executing only one request for repeated invocations of the same request within a certain time period, so as to reduce server load and improve page performance. At present, there are mainly two approaches for throttling network requests. One approach is that, within a certain time period, the same event is triggered multiple times, and only after the last triggered event satisfies preset conditions is the last triggered event executed. The other approach is that, within a certain time period, the event is executed only once, and multiple triggers occurring within an interval time are not executed.

### Technical Problem

However, the first approach requires the user to wait for a certain period of time, and thereafter cannot guarantee that the requested data is up to date. It can be seen that existing network request processing approaches still suffer from a problem of being unable to ensure real-time request data while reducing user waiting time.

### SUMMARY

The present disclosure provides a request processing method, an apparatus, a computer device, and a storage medium, so as to address the technical problem in existing request processing methods of being unable to ensure real-time request data while reducing user waiting time.

In a first aspect, the present disclosure provides a request processing method, comprising:
in response to a network request instruction triggered by a user on a target program page, determining an execution strategy of the network request instruction based on a request time of the network request instruction;
when the execution strategy is delayed execution, determining a delayed execution time according to a preset delay duration, and updating recorded execution request parameters based on request parameters of the network request instruction; and
in response to the delayed execution time, executing a network request corresponding to the execution request parameters according to the recorded execution request parameters.

As a feasible embodiment of the present disclosure, determining the execution strategy of the network request instruction based on a request interval corresponding to the network request instruction comprises:
determining the execution strategy corresponding to the network request instruction based on the request time corresponding to the network request instruction and a recorded last request execution time.

After the step of determining the execution strategy of the network request instruction based on the request time of the network request instruction, the method further comprises:
when the execution strategy is real-time execution, executing a target network request corresponding to the network request instruction based on the request parameters of the network request instruction; and
updating the recorded last request execution time based on an execution time of executing the target network request.

As a feasible embodiment of the present disclosure, determining the execution strategy corresponding to the network request instruction based on the request time corresponding to the network request instruction and the recorded last request execution time comprises:
when there is no recorded last request execution time, or a time interval between the request time corresponding to the network request instruction and the recorded last request execution time is greater than a preset interval threshold, determining the execution strategy corresponding to the network request instruction as real-time execution; and
when the time interval between the request time corresponding to the network request instruction and the recorded last request execution time is less than the preset interval threshold, determining the execution strategy corresponding to the network request instruction as delayed execution.

As a feasible embodiment of the present disclosure, before the step of determining the execution strategy corresponding to the network request instruction as real-time execution when the time interval between the request time corresponding to the network request instruction and the recorded last request execution time is greater than the preset interval threshold, the method further comprises:
acquiring a request frequency triggered by the user on the target program page; and
setting the interval threshold according to the request frequency.

As a feasible embodiment of the present disclosure, before the step of determining the execution strategy corresponding to the network request instruction as real-time execution when the time interval between the request time corresponding to the network request instruction and the recorded last request execution time is greater than the preset interval threshold, the method further comprises:
acquiring a program page type corresponding to the target program page; and
setting the interval threshold according to the program page type.

As a feasible embodiment of the present disclosure, determining the delayed execution time according to the preset delay duration and updating the recorded execution request parameters based on the request parameters of the network request instruction comprises:
acquiring the recorded execution request parameters;
when there are no recorded execution request parameters, determining the delayed execution time according to the preset delay duration, and recording the request parameters of the network request instruction as the execution request parameters; and
when there are recorded execution request parameters, updating the recorded execution request parameters based on the request parameters of the network request instruction.

After the step of executing the network request corresponding to the execution request parameters according to the recorded execution request parameters in response to the delayed execution time, the method further comprises:
clearing the recorded execution request parameters.

As a feasible embodiment of the present disclosure, before the step of determining the delayed execution time according to the preset delay duration and recording the request parameters of the network request instruction as the execution request parameters, the method further comprises:
acquiring performance parameters of a server corresponding to the network request instruction; and
setting the delay duration according to the performance parameters.

In a second aspect, the present disclosure provides a request processing apparatus, comprising:
a determination module, configured to, in response to a network request instruction triggered by a user on a target program page, determine an execution strategy of the network request instruction based on a request time of the network request instruction;
an updating module, configured to, when the execution strategy is delayed execution, determine a delayed execution time according to a preset delay duration, and update recorded execution request parameters based on request parameters of the network request instruction; and
an execution module, configured to, in response to the delayed execution time, execute a network request corresponding to the execution request parameters according to the recorded execution request parameters.

In a third aspect, the present disclosure further provides a computer device, comprising:
one or more processors;
a memory; and
one or more applications, wherein the one or more applications are stored in the memory and configured to be executed by the processors to implement any one of the request processing methods described above.

In a fourth aspect, the present disclosure further provides a computer-readable storage medium, wherein a computer program is stored thereon, and the computer program is loaded by a processor to execute any one of the request processing methods described above.

### Advantageous effects

In the request processing method provided in the embodiments of the present disclosure, after a network request instruction is triggered, an execution strategy of the network request instruction is determined. When the execution strategy is delayed execution, a time point after a preset delay duration is determined as a delayed execution time, and request parameters of the network request are recorded, so as to ensure real-time performance of the requested parameters. At the given delayed execution time, a corresponding network request is immediately executed based on the recorded request parameters. In the present disclosure, since the delayed execution time is associated with a first request, and the parameters used to execute the network request are associated with a last recorded request, it is possible to effectively reduce user waiting time while ensuring real-time performance of the requested data.

### BRIEF DESCRIPTION OF THE DRAWINGS

In order to more clearly illustrate the technical solutions in the embodiments of the present disclosure, the drawings required to be used in the description of the embodiments will be briefly introduced below. Obviously, the drawings described below are only some embodiments of the present disclosure, and for a person skilled in the art, other drawings may also be obtained based on these drawings without creative effort.
FIG. 1 is a flowchart of steps of a request processing method according to an embodiment of the present disclosure.
FIG. 2 is a flowchart of steps of another request processing method according to an embodiment of the present disclosure.
FIG. 3 is a flowchart of steps of determining an execution strategy according to an embodiment of the present disclosure.
FIG. 4 is a flowchart of steps of determining an interval threshold based on a request triggering frequency according to an embodiment of the present disclosure.
FIG. 5 is a flowchart of steps of determining an interval threshold based on a program page type according to an embodiment of the present disclosure.
FIG. 6 is a flowchart of steps of updating recorded execution request parameters according to an embodiment of the present disclosure.
FIG. 7 is a flowchart of steps of determining a delay duration based on server performance according to an embodiment of the present disclosure.
FIG. 8 is a schematic structural diagram of a request processing apparatus according to an embodiment of the present disclosure. and
FIG. 9 is a block diagram of a computer device according to an embodiment of the present disclosure.

### DETAILED DESCRIPTION OF EMBODIMENTS

The technical solutions in the embodiments of the present disclosure will be clearly and completely described below with reference to the accompanying drawings. Obviously, the described embodiments are only part of the embodiments of the present disclosure, rather than all of the embodiments. Based on the embodiments of the present disclosure, all other embodiments obtained by a person skilled in the art without creative effort shall fall within the protection scope of the present disclosure.

In the description of the present disclosure, the terms "first" and "second" are used merely for descriptive purposes and shall not be construed as indicating or implying relative importance or implicitly specifying the number of the indicated technical features. Thus, features defined by "first" and "second" may explicitly or implicitly include one or more of such features. In the description of the present disclosure, the term "plurality" means two or more, unless otherwise explicitly and specifically defined.

In the description of the present disclosure, the term "for example" is used to mean "serving as an example, instance, or illustration". Any embodiment described as "for example" in the present disclosure is not necessarily to be construed as being more preferred or advantageous than other embodiments. In order to enable any person skilled in the art to implement and use the present invention, the following description is provided. In the following description, details are set forth for explanatory purposes. It should be understood that a person of ordinary skill in the art may implement the present invention without using these specific details. In other instances, well-known structures and processes are not described in detail so as to avoid obscuring the description of the present invention with unnecessary details. Therefore, the present invention is not intended to be limited to the illustrated embodiments, but is to be accorded the broadest scope consistent with the principles and features disclosed in the present disclosure.

In order to facilitate understanding of the request processing method provided in the embodiments of the present disclosure, an application scenario of the request processing method provided in the embodiments of the present disclosure is first described. The request processing method provided in the embodiments of the present disclosure is mainly applied to real-time scenarios in which a user requests network data. For example, as a common application scenario, when a user opens an application program, a client program needs to request network data to display a corresponding page. Meanwhile, when the user stays on the page for a period of time or in response to a refresh operation by the user, the client program also re-requests network data. However, excessive data requests increase server load and also affect page performance. Therefore, under normal circumstances, network request throttling refers to executing only one request for repeated invocations of the same request within a certain time period. Specifically, within a certain time period, after the same event is triggered multiple times, only when the last triggered event satisfies preset conditions-for example, when no new network request is obtained within a period of time after the last triggered event-is the last triggered event executed; alternatively, after a certain event is triggered, the triggered network request is not executed within a certain time period. However, in the above approaches, the former requires the user to wait for a certain period of time, while the latter cannot ensure that the requested data is the most up-to-date data.

In order to solve the above problems, the present disclosure provides a request processing method, an apparatus, a computer device, and a storage medium, which can ensure real-time performance of requested data while reducing user waiting time. The request processing method provided in the embodiments of the present disclosure is typically installed in a request processing apparatus in the form of a computer program. The request processing apparatus is generally implemented in the form of a processor disposed in a computer device. The request processing apparatus in the computer device executes the request processing method provided in the embodiments of the present disclosure by running a computer program corresponding to the request processing method.

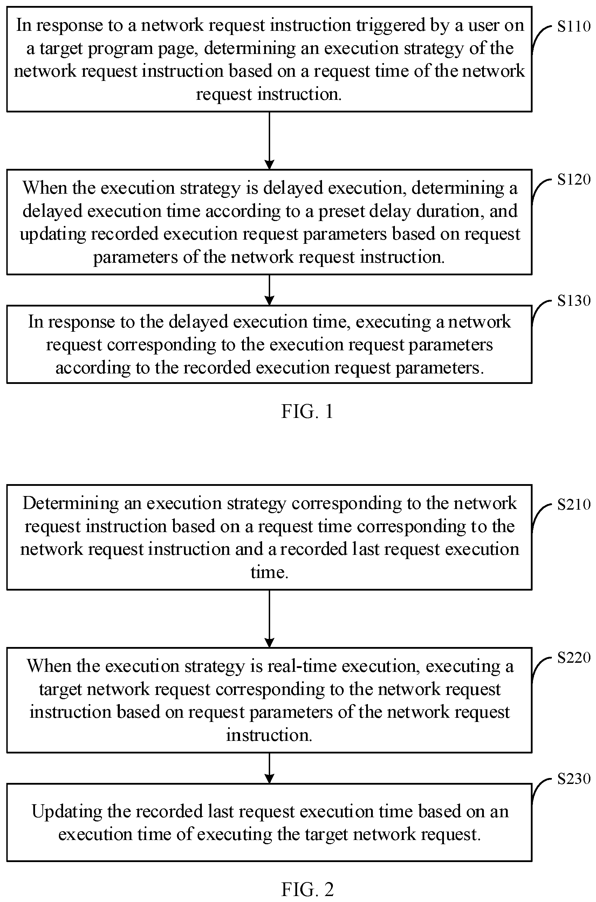

As shown in FIG. 1, FIG. 1 is a flowchart of steps of a request processing method according to an embodiment of the present disclosure, which includes steps S110 to S130.

S110: in response to a network request instruction triggered by a user on a target program page, determining an execution strategy of the network request instruction based on a request time of the network request instruction.

In combination with the application scenarios of the request processing method described above, the request processing method according to the embodiments of the present disclosure is mainly applied to network request processing for program page updates. Specifically, the method responds to a network request instruction triggered by a user on a target program page. Here, the network request instruction may comprise at least one of opening a page, updating a page, and exiting a page. An execution strategy of the network request instruction is then determined based on the request time of the network request instruction. In order to achieve request shunting and avoid frequent execution of network request operations within a certain period of time, the execution strategy generally comprises two types, namely real-time execution and delayed execution.

Specifically, as a feasible embodiment of the present disclosure, the execution strategy of the network request instruction may be determined based on a time interval between the triggered network request instruction and a last executed network request. Therefore, in this implementation process, it is necessary to record, in real time, a time of the last executed network request. That is, after each execution of a network request, the recorded request execution time needs to be updated. A specific implementation may be referred to in the subsequent description of FIG. 2 and the accompanying explanation.

S120: when the execution strategy is delayed execution, determining a delayed execution time according to a preset delay duration, and updating recorded execution request parameters based on request parameters of the network request instruction.

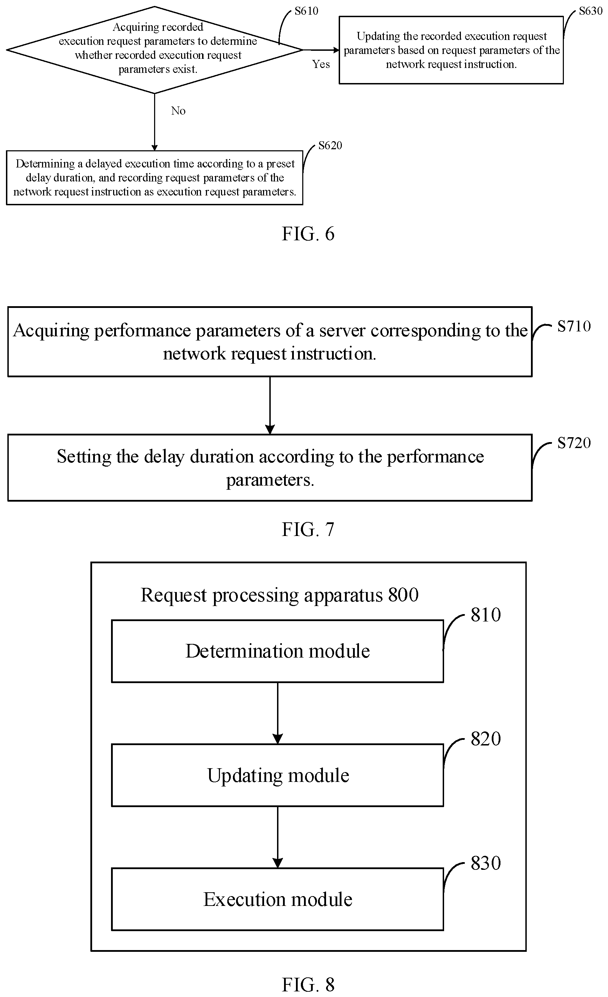

In the embodiments of the present disclosure, when the execution strategy is delayed execution, it indicates that the network request does not need to be executed immediately, but needs to be processed after a delay of a certain duration. Specifically, a delayed execution time needs to be determined first, and request parameters of the network request instruction are recorded for subsequent execution of the network request. Determination of the delayed execution time is performed only when a network request instruction for which the execution strategy is delayed execution is triggered for the first time. When a network request instruction for which the execution strategy is delayed execution is triggered multiple times within a short time period, the delayed execution time is not updated, and the delayed execution time determined for the first network request instruction for which the execution strategy is delayed execution is still used. However, the recorded execution request parameters are updated based on the request parameters of the current network request instruction. Accordingly, in the above process, after each execution of a network request, the recorded execution request parameters may be cleared, so as to facilitate subsequently determining, by judging whether recorded execution request parameters exist, whether the current network request execution corresponds to a first triggering of the delayed execution strategy, thereby determining whether a delayed execution time needs to be set. A specific implementation may be referred to in the subsequent description of FIG. 6 and the accompanying explanation.

Further, the delay duration used to determine the delayed execution time may be a fixed value set based on actual user requirements. Certainly, considering that the main purpose of request shunting is to reduce server load, as a feasible embodiment of the present disclosure, the delayed execution time may be determined based on performance parameters of a server. A specific implementation may be referred to in the subsequent description of FIG. 7 and the accompanying explanation.

S130: in response to the delayed execution time, executing a network request corresponding to the execution request parameters according to the recorded execution request parameters.

In the embodiments of the present disclosure, in response to the delayed execution time corresponding to a first network request that requires delayed execution-namely, when the delayed execution time is reached-the request processing apparatus immediately executes the corresponding network request based on the latest recorded execution request parameters obtained in the foregoing process, thereby ensuring real-time performance of the requested data while reducing user waiting time.

In the request processing method according to the embodiments of the present disclosure, after a network request instruction is triggered, an execution strategy of the network request instruction is determined. When the execution strategy is delayed execution, a time point after a preset delay duration is determined as a delayed execution time, and request parameters of the network request are recorded to ensure real-time performance of the requested parameters. At the given delayed execution time, a corresponding network request is immediately executed based on the recorded parameters. In the present disclosure, since the delayed execution time is associated with a first request, and the parameters used to execute the network request are associated with a last recorded request, it is possible to effectively reduce user waiting time while ensuring real-time performance of the requested data.

As shown in FIG. 2, FIG. 2 is a flowchart of steps of another request processing method according to an embodiment of the present disclosure, which is described in detail below.

Different from the flowchart of steps of the request processing method provided in FIG. 1, in the embodiments of the present disclosure, an execution strategy corresponding to a network request instruction is determined based on a request time and a recorded last request execution time. In addition, when the execution strategy is real-time execution, a corresponding target network request is immediately executed based on the network request instruction, and the recorded last request execution time is updated. Specifically, an implementation may be referred to in steps S210 to S230.

S210: determining an execution strategy corresponding to the network request instruction based on the request time corresponding to the network request instruction and a recorded last request execution time.

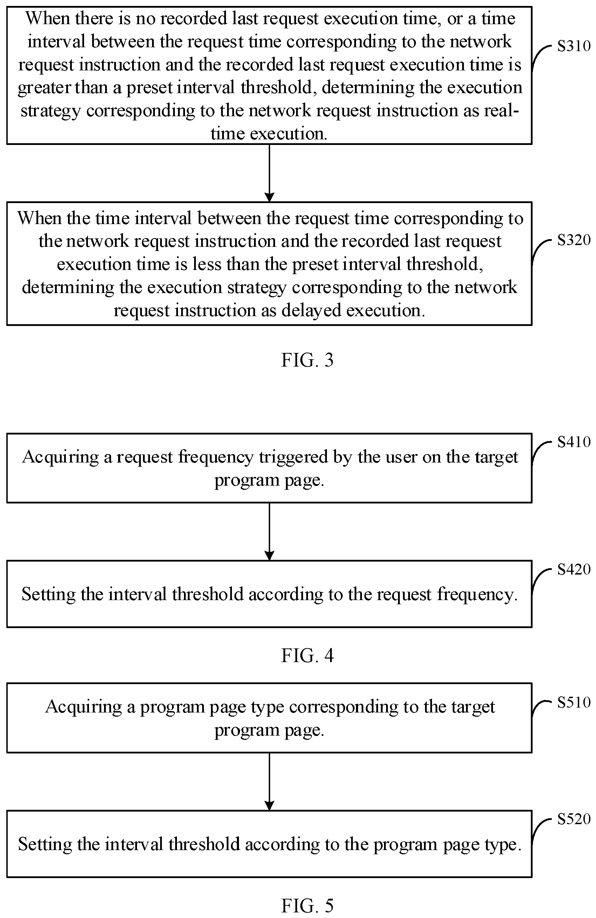

In the embodiments of the present disclosure, based on a time interval between the request time corresponding to the network request instruction and the recorded last request execution time, it can be determined whether the network request instruction is triggered again within a short time period after the last request execution, thereby determining whether the network request instruction needs to be delayed, that is, determining the execution strategy corresponding to the network request instruction. A specific determination of the execution strategy may be referred to in the subsequent description of FIG. 3 and the accompanying explanation.

S220: when the execution strategy is real-time execution, executing a target network request corresponding to the network request instruction based on the request parameters of the network request instruction.

While an implementation for delayed execution has been provided in the foregoing step S120, the embodiments of the present disclosure further provide steps for real-time execution of a network request instruction. Specifically, when the execution strategy is determined to be real-time execution, the request processing apparatus immediately executes the target network request corresponding to the network request instruction based on the request parameters of the network request instruction.

S230: updating the recorded last request execution time based on an execution time of executing the target network request.

In the embodiments of the present disclosure, after executing the network request based on the network request instruction, the request processing apparatus further updates the recorded last request execution time based on the execution time of the target network request, so as to be used for subsequent determination of an execution strategy for triggered network requests.

As shown in FIG. 3, FIG. 3 is a flowchart of steps of determining an execution strategy according to an embodiment of the present disclosure, which specifically includes steps S310 to S320.

S310: when there is no recorded last request execution time, or a time interval between the request time corresponding to the network request instruction and the recorded last request execution time is greater than a preset interval threshold, determining an execution strategy corresponding to the network request instruction as real-time execution.

In the embodiments of the present disclosure, when there is no recorded last request execution time, it indicates that the network request instruction is triggered for the first time. For example, when a user initiates a page request instruction when opening a program, an execution strategy corresponding to the network request instruction is determined as real-time execution, that is, the network request is immediately executed so as to avoid user waiting. In addition, when the time interval between the request time corresponding to the network request instruction and the recorded last request execution time is relatively long, that is, when network requests are not triggered multiple times within a short time period, in order to similarly avoid user waiting, the execution strategy corresponding to the network request instruction is also determined as real-time execution.

S320: when the time interval between the request time corresponding to the network request instruction and the recorded last request execution time is less than a preset interval threshold, determining the execution strategy corresponding to the network request instruction as delayed execution.

In the embodiments of the present disclosure, when there exists a recorded last request execution time, and the time interval between the request time corresponding to the network request instruction and the recorded last request execution time is less than the preset interval threshold, it indicates that network requests have been triggered multiple times within a short time period. In order to reduce server load and improve page performance, the request processing apparatus determines the execution strategy corresponding to the network request instruction as delayed execution. That is, request parameters of the network request instruction are recorded, and the recorded network request parameters are executed only at a determined delayed execution time.

Specifically, the interval threshold may be a preset threshold, which may be set to, for example, 1 second or 2 seconds. Certainly, the interval threshold may also be set based on requirements of actual application scenarios. For example, as a feasible embodiment of the present disclosure, the interval threshold may be related to a request frequency triggered by the user on the target program page. A specific implementation may be referred to in the subsequent description of FIG. 4 and the accompanying explanation. Alternatively, the interval threshold may be related to different program page types of application programs. A specific implementation may be referred to in the subsequent description of FIG. 5 and the accompanying explanation.

As shown in FIG. 4, FIG. 4 is a flowchart of steps of determining an interval threshold based on a request triggering frequency according to an embodiment of the present disclosure, which specifically includes steps S410 to S420.

S410: acquiring a request frequency triggered by the user on the target program page.

In the embodiments of the present disclosure, each network request triggered by the user on the target program page is recorded. Specifically, the request frequency triggered by the user on the target program page may be a number of times that network request instructions are triggered within a preset period, such as numbers of refreshing a page, opening a page, and exiting a page. The request frequency can, to a certain extent, reflect a degree of demand of the user for page data.

S420: setting the interval threshold according to the request frequency.

In the embodiments of the present disclosure, as can be understood in combination with the foregoing description, the request frequency can, to a certain extent, reflect the degree of demand of the user for page data. Specifically, a higher request frequency triggered by the user indicates a higher degree of demand of the user for page data and a lower tolerance for page waiting time. In this case, the interval threshold may be set to be lower. However, in order to avoid excessive server load caused by an excessively high network request frequency, a minimum allowable interval threshold exists. Specifically, for ease of understanding, when the request frequency is within a certain range, indicating that the degree of demand of the user for page data is moderate, the interval threshold may be set to, for example, 1 second or another preset value. As the request frequency increases, indicating an increasing degree of demand of the user for page data, the interval threshold is gradually reduced. When the interval threshold is finally reduced to the minimum allowable interval threshold, for example, 0.3 seconds, the interval threshold is no longer further reduced with further increases in the request frequency, so as to reduce server load.

As shown in FIG. 5, FIG. 5 is a flowchart of steps of determining an interval threshold based on a program page type according to an embodiment of the present disclosure, which specifically includes steps S510 to S520.

S510: acquiring a program page type corresponding to the target program page.

In the embodiments of the present disclosure, considering that frequencies of dynamic data changes differ among different program pages, for example, in a page of a smart home control software program that displays operating parameters of various household appliances, the operating parameters of household appliances change frequently and affect a user's home experience. Therefore, such a program page has relatively high requirements for real-time performance of displayed data. Alternatively, for example, in a page of a shopping program that displays inventory quantities of goods of merchants, since inventory quantities typically change at a relatively low frequency, the real-time performance requirement for the displayed data on such a program page is relatively low. Therefore, by acquiring the program page type corresponding to the target program page, requirements of the program page for real-time performance of the displayed data can be determined.

S520: setting the interval threshold according to the program page type.

In the embodiments of the present disclosure, as can be understood from the foregoing description, different program page types have different requirements for real-time performance of displayed data. Therefore, the interval threshold may be set based on the program page type. For example, for program page types in which data changes at a high frequency and real-time performance requirements are relatively high, such as pages displaying operating parameters of household appliances in a smart home control software program, the interval threshold may be set to be relatively low, for example, 1 second. Conversely, for program page types in which data changes at a low frequency and real-time performance requirements are relatively low, such as pages displaying inventory quantities of goods in a shopping program, the interval threshold may be set to be relatively high, for example, 10 seconds. Certainly, the above example values are provided merely for reference, and specific values may be set according to actual requirements, which are not further described herein.

In addition, it should be noted that FIG. 4 and FIG. 5 respectively provide two implementations for setting the interval threshold. These implementations may be combined, that is, a final interval threshold may be determined by comprehensively considering both the program page type and the request frequency triggered by the user on the target program page, thereby further improving user experience.

As shown in FIG. 6, FIG. 6 is a flowchart of steps of updating recorded execution request parameters according to an embodiment of the present disclosure, which specifically includes steps S610 to S630.

S610: acquiring recorded execution request parameters to determine whether recorded execution request parameters exist. If no recorded execution request parameters exist, step S620 is performed; otherwise, step S630 is performed.

In the embodiments of the present disclosure, the execution request parameters refer to recorded parameters of a network request to be executed at a delayed execution time. When no recorded execution request parameters exist, it indicates that the network request instruction is triggered for the first time within a short time period after a previous network request execution. In this case, a delayed execution time needs to be determined based on a triggering time of the network request instruction, and request parameters of the network request instruction are recorded as execution request parameters. Conversely, when recorded execution request parameters exist, it indicates that the network request instruction is triggered multiple times within a short time period after the previous network request execution. In order to avoid user waiting while ensuring real-time performance of requested data, the request processing apparatus only updates the recorded execution request parameters, rather than re-determining the delayed execution time. Accordingly, a finally executed delayed execution time is associated with a time at which the network request instruction is triggered for the first time within the short time period, while parameters finally executed are associated with a latest triggered network request instruction.

S620: determining a delayed execution time according to a preset delay duration, and recording the request parameters of the network request instruction as execution request parameters.

In the embodiments of the present disclosure, when the execution strategy is delayed execution and no recorded request parameters exist, it indicates that the network request instruction is triggered for the first time within a short time period after a previous network request execution. In this case, a final delayed execution time needs to be determined by combining a triggering time of the network request instruction with the preset delay duration, and request parameters of the network request instruction are recorded as execution request parameters.

S630: updating the recorded execution request parameters based on the request parameters of the network request instruction.

In the embodiments of the present disclosure, when the execution strategy is delayed execution and recorded request parameters exist, it indicates that the network request instruction is triggered multiple times within a short time period after the previous network request execution. In this case, since the delayed execution time has already been determined in advance, there is no need to re-determine the delayed execution time, and only the recorded execution request parameters need to be updated based on the request parameters of the current network request instruction, thereby ensuring real-time performance of the finally requested data while reducing user waiting time.

In addition, after each execution of a network request, the request processing apparatus performs a clearing operation on the recorded execution request parameters, so that when delayed execution is required subsequently, a delayed execution time can be re-determined based on a network request instruction triggered for the first time.

As shown in FIG. 7, FIG. 7 is a flowchart of steps of determining a delay duration based on server performance according to an embodiment of the present disclosure, which specifically includes steps S710 to S720.

S710: acquiring performance parameters of a server corresponding to the network request instruction.

In the embodiments of the present disclosure, considering that the purpose of delayed execution is to reduce server load, during processing of network requests, a client of the program page may acquire corresponding performance parameters of the server by means of request responses.

S720: setting the delay duration according to the performance parameters.

In the embodiments of the present disclosure, on the basis of the foregoing, when the performance parameters of the server are relatively low, the delay duration may be set to be relatively longer; conversely, when the performance parameters of the server are relatively higher, the delay duration may be set to be relatively shorter.

In order to facilitate understanding of a complete implementation process of the request processing method according to the embodiments of the present disclosure, a complete implementation of the request processing method is described below in conjunction with FIGS. 1 to 7 described above, taking a page update request of a smart home control software program as an example. Specifically, the method comprises the following steps:
1) when a network request instruction is triggered, such as opening a page, exiting a page, or updating a page, recording a triggering time *currentTime,* and reading a last request execution time *lastRequestTime*;
2) when there is no recorded last request execution time *lastRequestTime,* indicating that the network request is triggered by the user for the first time, determining an execution strategy of the network request instruction as real-time execution, executing a corresponding network request according to request parameters of the network request instruction, recording an execution time of executing the network request as the last request execution time *lastRequestTime,* and, when recorded execution request parameters *lastRequest* exist, clearing the recorded execution request parameters *lastRequest;* and then returning to step 1);
3) when there exists a recorded last request execution time *lastRequestTime,* determining, according to a difference between the last request execution time *lastRequestTime* and the triggering time *currentTime* of the network request instruction, whether the difference exceeds a preset interval threshold *duration,* wherein the interval threshold *duration* may be a preset fixed value, or may be dynamically set in real time based on a recorded frequency of triggering network request instructions by the user or based on a program page type;
4) when the difference exceeds the preset interval threshold *duration,* indicating that the user triggers a request operation after a sufficiently long time interval, not performing a shunting process, that is, determining the execution strategy of the network request instruction as real-time execution, executing a corresponding network request according to the request parameters of the network request instruction, recording an execution time of executing the network request as the last request execution time *lastRequestTime,* and, when recorded execution request parameters *lastRequest* exist, clearing the recorded execution request parameters *lastRequest*; and then returning to step 1);
5) when the difference does not exceed the preset interval threshold *duration,* indicating that the user triggers a request operation again within a short time period, determining the execution strategy of the network request instruction as delayed execution;
6) reading execution request parameters *lastRequest*; when no execution request parameters *lastRequest* exist, indicating that the network request instruction is a first request operation triggered by the user within the short time period, determining a delayed execution time based on the triggering time *currentTime* of the network request instruction and a set delay duration, and recording request parameters of the network request instruction as the execution request parameters *lastRequest*; conversely, when execution request parameters *lastRequest* exist, indicating that the network request instruction is not a first request operation triggered by the user within the short time period, updating the recorded execution request parameters *lastRequest* based on the request parameters of the network request instruction; and
7) at the delayed execution time, executing a network request based on the latest recorded execution request parameters *lastRequest,* clearing the recorded execution request parameters *lastRequest,* and then returning to step 1).

In order to better implement the request processing method according to the embodiments of the present disclosure, on the basis of the request processing method according to the embodiments of the present disclosure, a request processing apparatus is further according to the embodiments of the present disclosure. As shown in FIG. 8, the request processing apparatus 800 comprises a determination module 810, an updating module 820, and an execution module 830.

The determination module 810 is configured to, in response to a network request instruction triggered by a user on a target program page, determine an execution strategy of the network request instruction based on a request time of the network request instruction.

The updating module 820 is configured to, when the execution strategy is delayed execution, determine a delayed execution time according to a preset delay duration, and update recorded execution request parameters based on request parameters of the network request instruction.

The execution module 830 is configured to, in response to the delayed execution time, execute a network request corresponding to the execution request parameters according to the recorded execution request parameters.

In some embodiments of the present disclosure, the determination module 810 is further configured to determine the execution strategy corresponding to the network request instruction based on the request time corresponding to the network request instruction and a recorded last request execution time; the execution module 830 is further configured to, when the execution strategy is real-time execution, execute a target network request corresponding to the network request instruction based on the request parameters of the network request instruction, and update the recorded last request execution time based on an execution time of executing the target network request.

In some embodiments of the present disclosure, the determination module 810 is further configured to, when there is no recorded last request execution time, or a time interval between the request time corresponding to the network request instruction and the recorded last request execution time is greater than a preset interval threshold, determine the execution strategy corresponding to the network request instruction as real-time execution; and when the time interval between the request time corresponding to the network request instruction and the recorded last request execution time is less than the preset interval threshold, determine the execution strategy corresponding to the network request instruction as delayed execution.

In some embodiments of the present disclosure, the determination module 810 is further configured to acquire a request frequency triggered by the user on the target program page, and set the interval threshold according to the request frequency.

In some embodiments of the present disclosure, the determination module 810 is further configured to acquire a program page type corresponding to the target program page, and set the interval threshold according to the program page type.

In some embodiments of the present disclosure, the updating module 820 is further configured to acquire recorded execution request parameters; when there are no recorded execution request parameters, determine the delayed execution time according to the preset delay duration and record the request parameters of the network request instruction as execution request parameters; and when there are recorded execution request parameters, update the recorded execution request parameters based on the request parameters of the network request instruction. The execution module 830 is further configured to perform a clearing operation on the recorded execution request parameters.

In some embodiments of the present disclosure, the updating module 820 is further configured to acquire performance parameters of a server corresponding to the network request instruction, and set the delay duration according to the performance parameters.

For specific limitations of the request processing apparatus, reference may be made to the foregoing description of the request processing method, and details are not repeated herein. The modules in the request processing apparatus described above may be implemented entirely or partially by software, hardware, or a combination thereof. The modules may be embedded in a processor in a computer device in the form of hardware, or may be independent of the processor, or may be stored in a memory of the computer device in the form of software, so that the processor can invoke and execute operations corresponding to the modules.

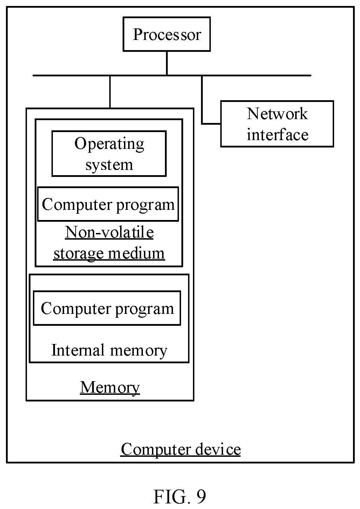

In some embodiments of the present disclosure, the request processing apparatus 800 may be implemented in the form of a computer program, and the computer program may run on a computer device as shown in FIG. 9. A memory of the computer device may store various program modules constituting the request processing apparatus 800, for example, the determination module 810, the updating module 820, and the execution module 830 shown in FIG. 8. A computer program composed of the program modules enables a processor to execute steps in the request processing method described in the embodiments of the present disclosure in this specification.

For example, the computer device shown in FIG. 9 may execute step S110 through the determination module 810 in the request processing apparatus 800 shown in FIG. 8. The computer device may execute step S120 through the updating module 820. The computer device may execute step S130 through the execution module 830. The computer device comprises a processor, a memory, and a network interface connected via a system bus. The processor of the computer device is configured to provide computing and control capabilities. The memory of the computer device comprises a non-volatile storage medium and an internal memory. The non-volatile storage medium stores an operating system and a computer program. The internal memory provides an operating environment for running the operating system and the computer program in the non-volatile storage medium. The network interface of the computer device is configured to communicate with an external computer device via a network connection. When the computer program is executed by the processor, a request processing method is implemented.

Those skilled in the art may understand that the structure shown in FIG. 8 is merely a block diagram of part of structures related to the solution of the present disclosure, and does not constitute a limitation on a computer device to which the solution of the present disclosure is applied. A specific computer device may include more or fewer components than those shown in the figure, or combine certain components, or have different component arrangements.

In some embodiments of the present disclosure, a computer device is provided, comprising: one or more processors; a memory; and one or more applications, wherein the one or more applications are stored in the memory and configured to be executed by the processors to implement the following steps:
in response to a network request instruction triggered by a user on a target program page, determining an execution strategy of the network request instruction based on a request time of the network request instruction;
when the execution strategy is delayed execution, determining a delayed execution time according to a preset delay duration, and updating recorded execution request parameters based on request parameters of the network request instruction; and
in response to the delayed execution time, executing a network request corresponding to the execution request parameters according to the recorded execution request parameters.

In some embodiments of the present disclosure, a computer-readable storage medium is provided, wherein a computer program is stored, and the computer program is loaded by a processor to cause the processor to execute the following steps:
in response to a network request instruction triggered by a user on a target program page, determining an execution strategy of the network request instruction based on a request time of the network request instruction;
when the execution strategy is delayed execution, determining a delayed execution time according to a preset delay duration, and updating recorded execution request parameters based on request parameters of the network request instruction; and
in response to the delayed execution time, executing a network request corresponding to the execution request parameters according to the recorded execution request parameters.

Those of ordinary skill in the art may understand that all or part of the processes of implementing the method in the foregoing embodiments may be accomplished by instructing relevant hardware through a computer program. The computer program may be stored in a non-volatile computer-readable storage medium. When the computer program is executed, the computer program may include processes of the embodiments of the foregoing methods. Any reference to memory, storage, a database, or other media used in the embodiments provided in the present disclosure may include at least one of non-volatile and volatile memories. Non-volatile memories may include read-only memory (Read-Only Memory, ROM), magnetic tape, floppy disk, flash memory, or optical storage, and the like. Volatile memories may include random access memory (Random Access Memory, RAM) or an external high-speed cache. By way of illustration and not limitation, RAM may be in various forms, such as static random access memory (Static Random Access Memory, SRAM) or dynamic random access memory (Dynamic Random Access Memory, DRAM), and the like.

The technical features of the foregoing embodiments may be combined arbitrarily. For brevity of description, not all possible combinations of the technical features in the foregoing embodiments are described. However, as long as no contradiction exists among combinations of the technical features, such combinations shall be considered as falling within the scope recorded in this specification.

The foregoing provides a detailed description of a request processing method, an apparatus, a computer device, and a storage medium provided in the embodiments of the present disclosure. Specific examples are used herein to illustrate the principles and implementation modes of the present invention. The descriptions of the foregoing embodiments are merely intended to help understand the method of the present invention and its core ideas. Meanwhile, those skilled in the art may make changes to the specific implementation modes and application scopes according to the ideas of the present invention. In summary, the contents of this specification shall not be construed as limiting the present invention.

## Claims

1. A request processing method, comprising:
in response to a network request instruction triggered by a user on a target program page, determining an execution strategy of the network request instruction based on a request time of the network request instruction;
when the execution strategy is delayed execution, determining a delayed execution time according to a preset delay duration, and updating recorded execution request parameters based on request parameters of the network request instruction; and
in response to the delayed execution time, executing a network request corresponding to the execution request parameters according to the recorded execution request parameters.

2. The request processing method according to claim 1, wherein determining the execution strategy of the network request instruction based on a request interval corresponding to the network request instruction comprises:
determining the execution strategy corresponding to the network request instruction based on the request time corresponding to the network request instruction and a recorded last request execution time.

3. The request processing method according to claim 2, wherein after the step of determining the execution strategy of the network request instruction based on the request time of the network request instruction, the method further comprises:
when the execution strategy is real-time execution, executing a target network request corresponding to the network request instruction based on the request parameters of the network request instruction; and
updating the recorded last request execution time based on an execution time of executing the target network request.

4. The request processing method according to claim 3, wherein determining the execution strategy corresponding to the network request instruction based on the request time corresponding to the network request instruction and the recorded last request execution time comprises:
when there is no recorded last request execution time, or a time interval between the request time corresponding to the network request instruction and the recorded last request execution time is greater than a preset interval threshold, determining the execution strategy corresponding to the network request instruction as real-time execution; and
when the time interval between the request time corresponding to the network request instruction and the recorded last request execution time is less than the preset interval threshold, determining the execution strategy corresponding to the network request instruction as delayed execution.

5. The request processing method according to claim 4, wherein before the step of determining the execution strategy corresponding to the network request instruction as real-time execution when the time interval between the request time corresponding to the network request instruction and the recorded last request execution time is greater than the preset interval threshold, the method further comprises:
acquiring a request frequency triggered by the user on the target program page; and
setting the interval threshold according to the request frequency.

6. The request processing method according to claim 4, wherein before the step of determining the execution strategy corresponding to the network request instruction as real-time execution when the time interval between the request time corresponding to the network request instruction and the recorded last request execution time is greater than the preset interval threshold, the method further comprises:
acquiring a program page type corresponding to the target program page; and
setting the interval threshold according to the program page type.

7. The request processing method according to claim 1, wherein determining the delayed execution time according to the preset delay duration, and updating the recorded execution request parameters based on the request parameters of the network request instruction comprises:
acquiring the recorded execution request parameters;
when there are no recorded execution request parameters, determining the delayed execution time according to the preset delay duration, and recording the request parameters of the network request instruction as the execution request parameters; and
when there are recorded execution request parameters, updating the recorded execution request parameters based on the request parameters of the network request instruction.

8. The request processing method according to claim 7, wherein after the step of executing the network request corresponding to the execution request parameters according to the recorded execution request parameters in response to the delayed execution time, the method further comprises:
clearing the recorded execution request parameters.

9. The request processing method according to any one of claims 1 to 8, wherein before the step of determining the delayed execution time according to the preset delay duration and recording the request parameters of the network request instruction as the execution request parameters, the method further comprises:
acquiring performance parameters of a server corresponding to the network request instruction; and
setting the delay duration according to the performance parameters.

10. The request processing method according to claim 1, wherein the network request instruction comprises at least one of opening a page, updating a page, and exiting a page.

11. The request processing method according to claim 1, wherein determining the execution strategy of the network request instruction based on the request time of the network request instruction comprises:
determining the execution strategy of the network request instruction based on a time interval between the triggered network request instruction and a last executed network request.

12. The request processing method according to claim 4, wherein the interval threshold is determined according to a frequency of triggering requests by the user on the target program page.

13. A request processing apparatus, comprising: a determination module, configured to, in response to a network request instruction triggered by a user on a target program page, determine an execution strategy of the network request instruction based on a request time of the network request instruction;
an updating module, configured to, when the execution strategy is delayed execution, determine a delayed execution time according to a preset delay duration, and update recorded execution request parameters based on request parameters of the network request instruction; and
an execution module, configured to, in response to the delayed execution time, execute a network request corresponding to the execution request parameters according to the recorded execution request parameters.

14. The request processing apparatus according to claim 13, wherein the determination module is specifically configured to:
determine the execution strategy corresponding to the network request instruction based on the request time corresponding to the network request instruction and a recorded last request execution time.

15. The request processing apparatus according to claim 14, wherein the determination module is specifically configured to:
when the execution strategy is real-time execution, execute a target network request corresponding to the network request instruction based on the request parameters of the network request instruction; and
update the recorded last request execution time based on an execution time of executing the target network request.

16. The request processing apparatus according to claim 14, wherein the determination module is further specifically configured to:
when there is no recorded last request execution time, or a time interval between the request time corresponding to the network request instruction and the recorded last request execution time is greater than a preset interval threshold, determine the execution strategy corresponding to the network request instruction as real-time execution; and
when the time interval between the request time corresponding to the network request instruction and the recorded last request execution time is less than the preset interval threshold, determine the execution strategy corresponding to the network request instruction as delayed execution.

17. The request processing apparatus according to claim 16, wherein the determination module is further specifically configured to:
acquire a request frequency triggered by the user on the target program page; and
set the interval threshold according to the request frequency.

18. The request processing apparatus according to claim 16, wherein the determination module is further specifically configured to:
acquire a program page type corresponding to the target program page; and
set the interval threshold according to the program page type.

19. A computer device, comprising:
one or more processors;
a memory; and
one or more applications, wherein the one or more applications are stored in the memory and configured to be executed by the processors to implement the request processing method according to any one of claims 1 to 12.

20. A computer-readable storage medium, wherein a computer program is stored thereon, and the computer program is loaded by a processor to execute the request processing method according to any one of claims 1 to 12.
